# EUROPEAN PATENT SPECIFICATION

(11) **EP 4 409 228 B1**
(45) Date of publication and mention of the grant of the patent: **15.07.2026**
(21) Application number: 22782948.8
(22) Date of filing: 28.09.2022
(51) Int. Cl.: G01B 17/02, G01N 29/07, G01N 29/11

(54) **ULTRASOUND METHOD FOR INSPECTING AN OBJECT**
ULTRASCHALLVERFAHREN ZUR INSPEKTION EINES OBJEKTS
PROCÉDÉ ULTRASONORE POUR L'INSPECTION D'UN OBJET

(30) Priority: 29.09.2021 EP 21275137
(43) Date of publication of application: 07.08.2024
(73) Proprietor: Renishaw PLC, Wotton-under-Edge, Gloucestershire GL12 8JR (GB)
(72) Inventor: WILSON, David, John, Edinburgh Lothian EH14 4AP (GB)
(74) Representative: Rolfe, Edward William
(86) International application number: PCT/GB2022/052447
(87) International publication number: WO 2023/052756

(56) References cited:
- CN-B- 107 063 145
- US-A1- 2017 276 651
- US-A1- 2018 328 896

## Description

The present invention relates to methods for inspecting a part and associated apparatus, in particular those involving ultrasound inspection devices which acquire ultrasound measurements of an object.

It is known to measure the quality and/or dimensions of manufactured objects to ensure they conform to quality requirements/tolerance. In the case of high value components, such as aerospace turbine blades, the external form of an object can be measured to sub-micron accuracy using a surface contact probe mounted on a coordinate measuring machine (CMM). Examples of techniques for measuring the positions of multiple points on the surface of an object using a CMM equipped with a surface contact (e.g. scanning) probe are described in US5189806 and WO2009/024783.

In addition to surface measurements, it is often necessary to measure the internal features/structure of an object and/or identify internal faults. For example, turbine blades are typically hollow to enable them to be both light-weight and strong for operation at extreme temperatures and pressures. The internal inspection of such hollow turbine blades is typically carried out using an ultrasound inspection device, for example ultrasound immersion systems or an ultrasound thickness gauging probe. Such ultrasound inspection devices emit an ultrasound pulse, which is projected into the object being inspected, and echoes of the pulse are recorded by the ultrasound inspection device. The time delay between echoes of the pulse can provide valuable information about the object. Such systems can be referred to as a pulse-echo ultrasound inspection device.

Ultrasonic immersion systems generally involve submerging the test piece entirely within a water bath. A single pulse-echo transducer, or a pair of transmit/receive transducers, are appropriately positioned relative to the part using a computer controlled robotic arm. The water provides good acoustic coupling with the part but the arrangement is expensive and complex, especially for larger parts. An example of an ultrasonic immersion system is described in GB2440959.

In contrast to ultrasonic immersion systems, ultrasound probes do not require the part to be immersed in water but instead typically rely on the localised application of a couplant material (e.g. a coupling gel or liquid) to the part. Such probes tend to be handheld, but it has been described previously how such probes may be mounted to the quill of a CMM. For example, US2009/0178482 describes an ultrasound probe mounted to the quill of a CMM. The ultrasound probe of US2009/0178482 includes a gimbal mount that allows the sensor to align with the surface normal of the object when contact with the object is established. As explained in paragraph 19 of US2009/0178482 a couplant material, such as a gel or grease, must be applied to the relevant areas of the object prior to inspection to ensure adequate acoustic coupling between the ultrasound probe and the object. Handheld ultrasound probes that use a dry-couplant layer are also known.

WO2016/051147 describes various configurations of ultrasound probes for mounting on a positioning apparatus such as a CMM. In particular, WO2016/051147 describes ultrasound probes comprising a deformable coupling element (in contrast to ultrasound probes having a hard/rigid coupling element). The deformable coupling element can provide both ultrasound coupling to the part and also act as a delay line. WO2016/051147 also describes that the coupling element can comprise a self-lubricating material which preferably releases a lubricant, such as water and/or oil, from its external surface in a controlled manner. The self-lubricating material may comprise an oleophilic (silicone) elastomer, optionally a hydrophilic elastomer.

WO2020/174214 describes a method of calibrating an ultrasound probe to determine its axis of optimum signal such that it can be determined how to subsequently orient the probe to achieve a desired signal during part inspection.

Typically, ultrasound inspection devices employ one of three well-known modes of operation from which the time delay information can be extracted from an ultrasound signal measured. These different modes are typically termed Mode-1, Mode-2 and Mode-3 respectively. In Mode-1, the time delay measurement is made between the initial excitation pulse and the first echo/reflection from an internal feature or back-wall feature of the object (collectively referred to as an "interface echo"). In Mode-2 gauging, the time delay measurement is made between an echo/reflection from the front-wall feature (i.e. a "front-wall" echo) and the first interface echo from an internal or back-wall feature. In Mode-3 gauging, the time delay measurement is made between two or more successive interface echoes from an internal or back-wall feature.

US2018/0328896 and CN107063145 discloses methods and systems for ultrasonic inspection which involve processing ultrasound signals via autocorrelation of the ultrasound signal.

As described in more detail below, the present invention relates to a new, improved method for determining/finding the time delay between echoes, which can be used, for instance, to determine the thickness of a part.

The present invention relates to improvements in methods for determining/finding the time delay between echoes of an ultrasound pulse emitted by an ultrasound inspection device into an object. Such improvements can provide improvements in determining one or more properties of the object, such as the speed of sound in the object, the thickness of the object and/or the depth of internal features in the object.

According to a first aspect of the invention, there is provided a method of determining the time delay between echoes of an ultrasound pulse emitted by an ultrasound inspection device into an object, the method comprising: i) with the ultrasound inspection device in engagement with a front-wall feature of an object at a point to be measured, taking an ultrasound measurement, which comprises the ultrasound inspection device emitting an ultrasound pulse and recording an ultrasound measurement signal comprising a front-wall echo (i.e. an echo reflected by the front-wall feature of the object) and at least one interface echo reflected by an internal or back-wall feature of the object; and ii) determining/finding the time delay between the front-wall echo and the at least one interface echo via autocorrelation of at least a segment of the ultrasound measurement signal which comprises the front-wall echo and the at least one interface echo, wherein the method additionally comprises, prior to said autocorrelation, inverting the amplitude of one of: a) the part of the ultrasound measurement signal comprising the front-wall echo; or b) the part of the ultrasound measurement signal comprising the at least one interface echo.

A benefit of the present invention is that, unlike the known Mode-1, Mode-2 and Mode-3 techniques described above, the method of the present invention has been found to provide reliable echo time delay measurement, across a wide range of part thicknesses. For instance, prior to the present invention, the inventor typically used a Mode-3 technique to measure relatively thin parts, and a Mode-2 technique to measure relatively thick parts. This led to issues in determining which Mode/technique to use for those parts having a thickness which wasn't easy to classify or identify as being thick or thin (or for which the nominal thickness was unknown). With the present invention, the same technique can be used to establish the time delay measurement regardless of the thickness of the part.

In another particularly advantageous embodiment, the method additionally comprises, prior to said autocorrelation, scaling the amplitude of: a) the part of the ultrasound measurement signal comprising the front-wall echo; and/or b) the amplitude of the part of the ultrasound measurement signal comprising the at least the interface echo; so as to reduce the difference in the amplitudes therebetween. The scaling could be configured such that the ratio of the amplitude of the front-wall echo to the amplitude of the at least one interface echo is not more than 10: 1, for instance not more than 2: 1, preferably not more than 3:2, more preferably substantially 1: 1. Optionally, the scaling could be implemented by merely reducing the amplitude of the part of the ultrasound measurement signal comprising the front-wall echo by a predetermined amount (e.g. by half) and/or by merely increasing the amplitude of the part of the ultrasound measurement signal comprising the at least one interface echo by a predetermined amount (e.g. by double).

When multiple interface echoes are present between successive front-wall echoes, the method could comprise discarding at least one of said interface echoes from the signal from said autocorrelation. This could comprise, for instance, discarding any echoes occurring after a predetermined time and/or event. For instance, the method could comprise discarding any interface echoes present in the measurement signal after the nth interface echo, e.g. where n is an integer having a value of at least 1. For example, the method could comprise discarding any interface echoes greater than the 3^{rd} interface echo. Optionally, for example, the method could comprise discarding any echoes occurring subsequent to a time halfway between a first interface echo and a second front-wall echo.

The method could comprise determining from the time delay determined at step ii) at least one of the thickness of, material structure of (e.g. porosity or density of, crystal morphology and/or orientation of), or speed of sound within the object between the front-wall feature and the internal or back-wall feature, at the point of measurement.

Optionally, the front-wall feature and the internal or back-wall feature of the object are nominally parallel.

The ultrasound inspection device could comprise a coupling element for engaging the surface of an object to be inspected. The coupling element could comprise a deformable coupling element. In other words, the coupling element can be a soft coupling element (as opposed to a rigid/hard coupling element). Accordingly, the method can comprise loading the coupling element onto the surface of the object such that the coupling element is deformed out of shape. For example, the coupling element can comprise an elastomer. For example, the coupling element can comprise a polymer, for example a superabsorbent polymer.

The coupling element can be wet, e.g. with lubricant. Any appropriate lubricant can be used. Advantageously, the coupling element can comprise a self-lubricating material. A self-lubricating material preferably releases a lubricant, such as water and/or oil, from its external surface in a controlled manner. The self-lubricating material may comprise an oleophilic elastomer. Advantageously, the self-lubricating material comprises a hydrophilic elastomer. For example, the hydrophilic elastomer may comprise an incompressible gelatinous hydrophilic elastomer material such as a lightly cross-linked hydrophilic vinyl elastomer or a super absorbent polymer hydrogel, for example Sodium polyacrylate. An example of a high water content hydrophilic polymer chain compounds is MMA:VP (i.e. a Copolymer of N-vinyl pyrrolidone and methyl methacylate). For this compound, the water content can vary from about 35% to 95% and excellent acoustic properties are exhibited although the tear strength decreases as the water content is increased. Conveniently, the contact element/self-lubricating material is provided as a sphere. A preferred embodiment of the coupling element comprises at least one hydrophilic elastomer sphere.

The ultrasound inspection device could be mounted on a positioning apparatus, for example a coordinate positioning apparatus. The positioning apparatus may include a machine tool, a robot or an arm. The positioning apparatus may be a manually operated positioning apparatus, but preferably the positioning apparatus comprises one or more motors for automatic operation, e.g. under the control or one or more processing devices (e.g. a machine controller). In a preferred embodiment, the coordinate positioning apparatus comprises a coordinate measuring machine. The CMM may be a Cartesian (e.g. bridge type) CMM or a non-Cartesian (e.g. hexapod) CMM. The positioning apparatus could facilitate relative translational motion of the ultrasound inspection device and object in at least two linear degrees of freedom. The positioning apparatus could facilitate relative rotational motion of the ultrasound inspection device and object about at least one axis of rotation.

The ultrasound inspection device could be mounted on an articulated member which has at least one, and optionally two (preferably orthogonal) axes of rotation. The articulated member could be a continuously articulated member. Optionally, the articulated member comprises an indexed articulated member (e.g. the articulated member comprises a set number of discrete orientations at which the articulated member can be locked). The articulated member can comprise at least one motor for controlling the orientation of the ultrasound probe about the at least one axis.

The articulated member could be mounted on a member of the coordinate positioning apparatus which is moveable along said at least two linear degrees of freedom, and preferably is mounted on a member of the coordinate positioning apparatus which is moveable along three orthogonal degrees of freedom. In the case of a bridge-type CMM such a member is commonly referred to as the "quill" or "Z-column". Accordingly, the ultrasound inspection device could be mounted on what is commonly referred to in the field as a five-axis coordinate positioning apparatus. If desired, the object could additionally/alternatively be mounted so as itself to be linearly and/or rotatably moveable, e.g. it could be mounted on a rotary table.

The ultrasound probe can comprise a body portion distal the coupling element. In other words, the ultrasound probe can comprise a body portion at a first end, and the coupling element at the second end. The ultrasound probe can be mounted to the positioning apparatus via the body portion. The ultrasound probe (for example the body portion) and the positioning apparatus (for example, the articulated member/rotary head) can comprise corresponding mounting features for enabling the ultrasound probe to be mounted to the positioning apparatus, in particular which enable the ultrasound probe to be automatically loaded and unloaded on and off the positioning apparatus. In other words, preferably, the ultrasound probe is auto-changeable on the positioning apparatus, e.g. to/from a rack located in the positioning apparatus' operating volume. The ultrasound probe (for example the body portion) and positioning apparatus can comprise complementary features of a repeatable mount, for example complementary features of a kinematic mount. At least one of the ultrasound probe and positioning apparatus can comprise at least one magnet for retaining the ultrasound probe on the positioning apparatus.

The ultrasound inspection device could itself include at least one processing device for analysing the ultrasound measurement signal received by the ultrasound transducer to determine the time delay. Alternatively, the ultrasound measurement signal could be analysed by an off-inspection device processing device (e.g. in an external interface or using an off-line computer).

As will be understood, references herein to "processing device"/ "processor" / "component for processing", and the like, are intended to include bespoke processing devices configured for the specific application (e.g. a field programmable gate array "FPGA") as well as a more generic processing devices which can be programmed (e.g. via software) in accordance with the needs of the application in which it is used. Accordingly, suitable processing devices include, for example, a CPU (Central Processor Unit), FPGA (Field Programmable Gate Array), or ASIC (Application Specific Integrated Circuit), or the like.

The ultrasound inspection device can comprise at least one transducer for emitting an ultrasound pulse. The ultrasound inspection device can comprise at least one transducer for sensing an ultrasound pulse. Optionally, the ultrasound probe comprises the at least one transducer for emitting an ultrasound pulse and the at least one transducer for sensing an ultrasound pulse. Optionally, the at least one transducer for emitting the ultrasound pulse is the same sensor that is used to sense the ultrasound pulse. In other words, the ultrasound inspection device can comprise a single transducer for emitting and detecting the ultrasound pulse. The transducer may comprise a piezoelectric element. Preferably, the transducer excites longitudinal sounds waves (L-waves). The ultrasound inspection device can comprise a single-channel inspection device. For example, the ultrasound inspection device could comprise just one active element/transducer performing pulse echo operation. Optionally, the ultrasound inspection device could comprise a phased array inspection device.

The ultrasound inspection device may excite and receive ultrasound in any known way. The ultrasound inspection device may operate at a high frequency. For example, the operating frequency may be greater than 5MHz, greater than 10MHz or more preferably greater than 15MHZ. In an example embodiment, the operating frequency is around 20MHz. Higher frequencies (e.g. such as those above 15MHZ) have been found to be particularly useful for probes with a deformable tip, and in particular have been found to provide higher resolution measurements. It has been found that at lower frequencies more noise can occur inside the deformable tip.

Embodiments of the invention will now be described, by way of example only, with reference to the following drawings in which:
Figure 1 schematically illustrates the fundamental operating principles of an example ultrasound probe;
Figure 2 illustrates the principle of ultrasound thickness measurement;
Figure 3 illustrates an ultrasound probe mounted on a coordinate measuring machine (CMM);
Figure 4 illustrates the different mechanical parts of an ultrasound probe;
Figure 5 illustrates the different electrical modules of an ultrasound probe;
Figures 6a and 6b illustrates how the difference between assumed and calibrated L-wave axis of an ultrasound probe can affect the propagation of the L-wave in a part;
Figure 7a and 7b respectively illustrate an example A-scan plot comprising the front-wall echo signal and multiple interface echo signals and a corresponding autocorrelation signal thereof;
Figure 8a illustrates the same example A-scan plot of Figure 7a, but wherein the front-wall echo signal has been inverted;
Figure 8b illustrates the autocorrelation signal of Figure 8a;
Figure 9a illustrates the same example A-scan plot of Figure 7a, but wherein the front-wall echo signal has been inverted and also has been scaled such that the ratio of the peak envelope amplitude of the first interface echo to the peak envelope amplitude of the first front-wall echo is equal;
Figure 9b illustrates the autocorrelation signal of Figure 9a;
Figure 10a illustrates an example A-scan plot received from an ultrasound measurement taken on a thick part where only a single interface echo signal is received between the first and second front-wall echoes;
Figures 10b illustrates the autocorrelation signals of the raw signal of Figure 10a;
Figure 10c illustrates the autocorrelation of the signal of Figure 10a wherein the part of the signal comprising the DL1 echo has been inverted;
Figure 10d illustrates the autocorrelation of the signal of Figure 10a wherein the part of the signal comprising the DL1 echo has been inverted, and wherein the amplitude of the part of the signal comprising the DL1 echo has been scaled such that the ratio of the peak envelope amplitude of BW1 to the peak envelope amplitude of DL1 is equal; and
Figure 11 shows the "First Peak" of the autocorrelation of a "primary measurement window" for both a signal wherein all interface echoes are still present in the "primary measurement window" and also for where some interface echoes have been removed.

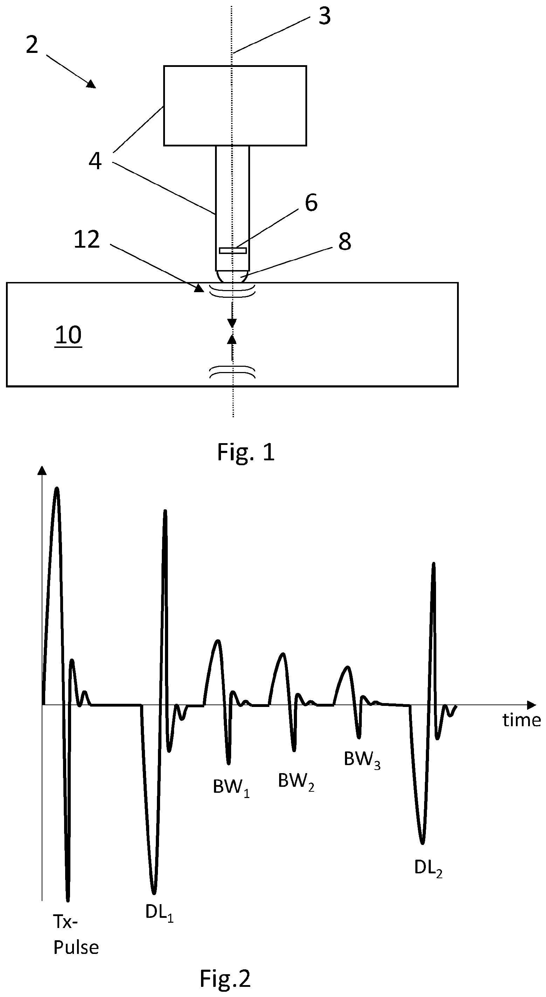

The fundamental operating principles of an example ultrasound inspection device will be explained with reference to Figures 1 and 2. Figure 1 shows an ultrasound probe 2 that comprises an outer body 4. An ultrasound wave/pulse transducer, e.g. a longitudinal wave ("L-wave") transducer, is provided that comprises a piezoelectric element 6 and a deformable coupling element 8. As will be understood, other commonly employed components within the ultrasound probe, such as the backing layer and matching layer (wave-plate), can form part of the ultrasound probe, but which for simplicity are not shown in Figure 1. To measure the thickness of an object 10, the probe 2 and/or object 10 are moved so as to engage the deformable coupling element 8 and the front-wall feature/surface 9 of the object 10. When an excitation pulse is applied across the piezoelectric element 6, an ultrasound pulse 12 is projected into the object 10. As schematically illustrated, this ultrasound pulse 12 is reflected by the back-wall feature 11 of the object (or any internal features between the front-wall 9 and back-wall 11 features), this reflected echo is sensed by the ultrasound probe (e.g. via the piezoelectric element 6). This process can be referred to as pulse-echo measurement, or more colloquially as "pinging". As will be understood, a thickness measurement estimation can be made using a time-of-flight or time-delay measurement of the projected ultrasound waveform.

Figure 2 is an example of the ultrasound signal/waveform received by the transducer's active piezoelectric element 6 in response to a transient high voltage excitation pulse being applied across the piezoelectric element 6. This time-domain waveform, referred to as an "A-scan" plot, can be a time averaged response from a train of such excitation pulses (e.g. a sequence of N pulses where N is at least 2, although a suitable range of values of N may be 16-32) in order to suppress random uncorrelated electronic noise.

The initial excitation pulse generated by the piezoelectric element 6 is labelled as the "Tx-Pulse" in Figure 2. This initial excitation pulse causes the inspection L-wave to propagate into the coupling element 8 (which acts as a delay line) and travel along at the speed of sound in the coupling element material (C_{L}). The first reflection/echo peak (DL1) received back at the piezoelectric element 6 arises from reflection of sound from the front-wall surface/feature 9 of the object 10. This reflection/echo from the front-wall surface/feature 9 of the object 10 (i.e. the DL1 echo) can be seen to occur at a time well after the initial transmit pulse (Tx-pulse) has completely receded.

Although some ultrasound is reflected back from the front-wall feature and never enters the object 10, a sufficient proportion of ultrasound does transmit into the object 10 as a measurable inspection pulse from which subsequent thickness measurements can be made. The speed of sound in the deformable coupling element 8 can be low compared to the speed of sound within the object 10, and so especially if the object is relatively thin, multiple reflections/echoes from the internal or back-wall feature 11 of the part 10 can occur before a second reflection/echo peak (DL2) from the delay line/coupling element 8 is registered at the transducer. These internal/back-wall reflections/echoes thus provide the pulses BW1, BW2, and BW3 that can also be seen in the "A-scan" plot of Figure 2. The time window observed within the A-scan between the first and second delay line reflection peak (DL1 and DL2) is thus the probe's "primary measurement window".

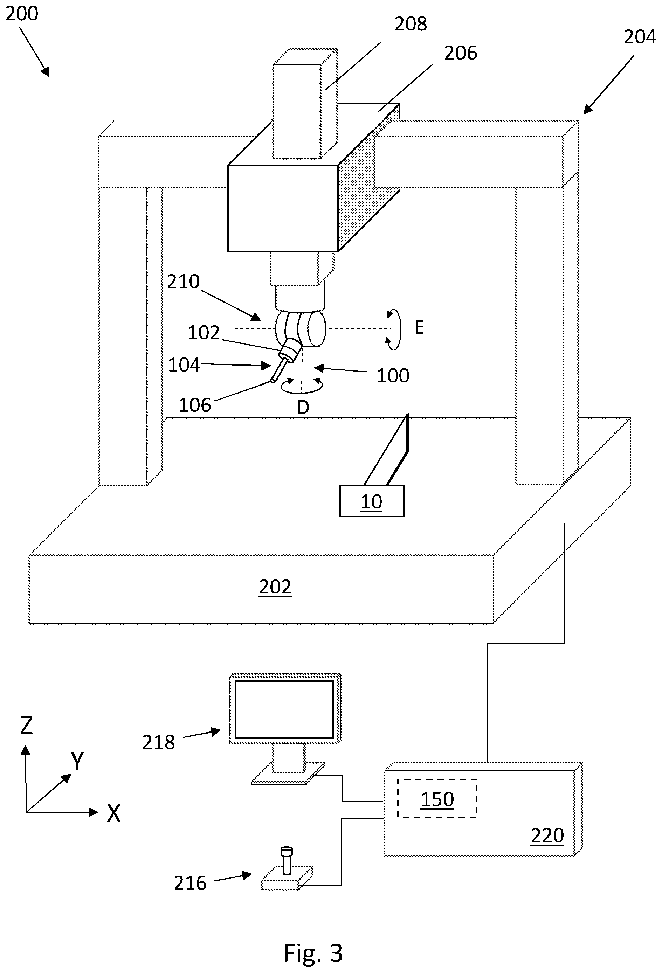

With reference to Figure 3 there is shown an ultrasound probe 100, like that described above in connection with Figures 1 and 2, mounted on a positioning apparatus 200. The positioning apparatus comprises a movement structure, in this case in the form of a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame along the Y axis, and the carriage 206 along the X axis, and the quill 208 along the Z-axis).

The quill 208 holds an articulated head 210, which could be an indexing head or a continuous head, but preferably is a continuous head (e.g. a REVO^{®} head available from Renishaw plc). As will be understood, a continuous head enables orientation of a device mounted on it at substantially any angle about at least one axis and are often described as providing a near infinite number of angular orientations. Also, if desired, the orientation of the measurement device about an axis of a continuous head can be changed during measurement (e.g. whilst a contact probe is in contact with an object being inspected and acquiring measurement information). In contrast, an indexing head has a discrete number of defined ("indexed") positions at which the measurement device mounted on it can be locked. With an indexing head, the orientation of the measurement device can be changed, but not during the acquisition of measurement data.

In this embodiment, the articulated head 210 facilitates rotation of the probe 100 mounted on it, about first and second rotational axes D, E via appropriate bearings and motors (not shown).

The combination of the two rotational axes (D, E) provided by the articulated head 210 and the three linear (X, Y, Z) axes of translation of the CMM 200 allows the probe 100 to be moved/positioned in five degrees of freedom (two rotational degrees of freedom, and three linear degrees of freedom).

Further, although not shown, measurement encoders may be provided for measuring the relative positions of the base 202, frame 204, carriage 206, quill 208 and the parts of the articulated head 210 so that the position of the measurement probe 100 relative to a workpiece 10 located on the base 202 can be determined.

A controller 220 is provided for controlling the operation of the CMM 200, such as controlling the position and orientation of the ultrasound probe within the CMM volume (either manually, e.g. via an input device such as joystick 216, or automatically, e.g. under the control of an inspection program) and for receiving information (e.g. measurement information) from the CMM 200. A display device 218 can be provided for aiding user interaction with the controller 220. The controller 220 could, for example, be a dedicated electronic control system and/or may comprise a personal computer.

As shown, a probe interface 150 (for facilitating communication with the probe 100) can be provided in the controller 320, for example.

As will be understood, the present invention can be used with other types of positioning device, such as a robot arm, machine tool apparatus, and can even be used with manually held ultrasound inspection device.

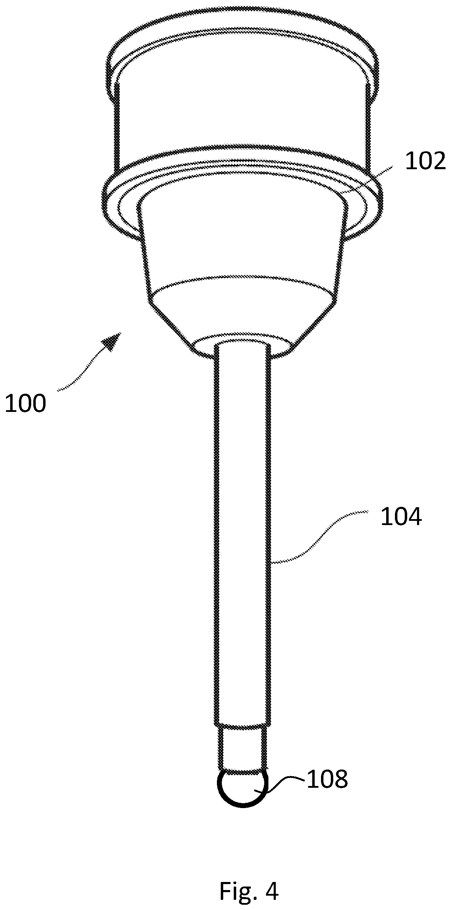

The present invention is suitable for use with a range of different types of ultrasound inspection device. WO2016/051147 and WO2016/051148 describe various types of ultrasound probe which the invention can be used with. For the sake of illustration, one particular type of ultrasound probe 100 will now be described in more detail in connection with Figure 4, which is configured to be mounted on a positioning apparatus, such as the CMM of Figure 3. The ultrasound probe 100 comprises a base module that includes a main body portion 102, which is provided at the proximal end of the probe 100 that attaches to the positioning apparatus/CMM. The main body 102 can contain electronics required to power the probe and communicate control data and activation commands to the probe (e.g. to schedule ultrasonic measurements). Power and/or control data, including ultrasonic data and thickness measurement results, may be passed through the rotary head communication channels and/or wirelessly. Rather than power being provided via the CMM, power could be provided by a battery located in the main body portion 102, for example.

An elongate tube 104 (e.g. a rigid carbon-fibre tube) extends from the main body 102, along the probe's axial length. A coupling element 108, in particular a deformable coupling element, is located at the end of the tube 104 distal the main body 102. In the embodiment described, the deformable coupling element 108 comprises a hydrophilic elastomer. Optionally, the deformable coupling element 108 is replaceable (e.g. could be attached via a screw or snap-fit). Optionally, and as is the case in the embodiment described, at least the portion of the coupling element 108 which protrudes from the tube 104 is spherical. As will be understood, the deformable coupling element may engage a wear plate of the transducer in the probe, and the deformable coupling element 108 may act as both the coupling element and a delay line. The deformable coupling element 108 can be soft and elastic so as to easily conform to the surface of the object 10 it engages.

In use, the ultrasound probe 100 is moved by the CMM 200 so as to bring the deformable coupling element 108 into contact with the front-wall feature 9 of the object 10 to be inspected, thereby forming an acoustic coupling with the object. The ultrasound probe 100 generates an ultrasound pulse/wave (for example, via a piezo-electric element) which is imparted into the object 10, and reflected by an internal feature or back-wall feature 11 of the object 10. The reflected ultrasound waves are sensed by the ultrasound probe, and analysed to determine the distance of the internal feature/back-wall feature 11 from the front-wall feature 9 of the object 10 (e.g. to determine the depth of the internal feature/thickness of the object 10).

The ultrasound inspection apparatus may excite and receive ultrasound in any known way. The ultrasound inspection apparatus may operate at a high frequency. For example, the operating frequency may be greater than 5MHz, greater than 10MHz or more preferably greater than 15MHZ. In a preferred embodiment, the operating frequency is around 20MHz. The transducer, which may comprise a piezoelectric element, preferably excites longitudinal sounds waves (L-waves).

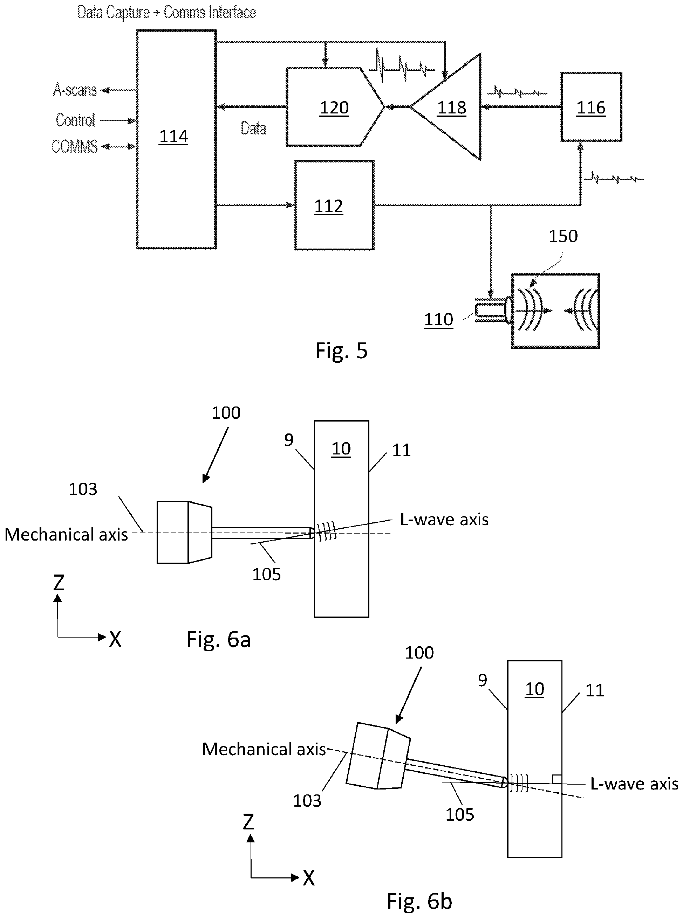

Figure 5 schematically illustrates an example embodiment of the analogue and digital electronic modules that can be provided with (e.g. within) the ultrasonic probe 100. As schematically shown, the ultrasound probe comprises an ultrasound transducer 110, for example a pulse-echo ultrasonic transducer that includes a piezo-electric element for transmitting high frequency time-discrete longitudinal waveforms (hereinafter termed "L-waves"), when driven by a train of high-voltage impulsive excitation pulses; e.g. negative going transition (NGT) pulses between 50-150V and of duration 1/2f.

An analogue "pulser" circuit 112 is provided that is capable of generating the repeated trains of high voltage (50-150V) a.c. analogue signals (e.g. NGT pulses). Although the pulser 112 is provided, a more sophisticated digital waveform synthesizer could alternatively be employed to generate frequency or amplitude modulated waveforms to drive the piezo in more attenuating environments. The high voltage pulses generated by the pulser 112 effectively drives the piezoelectric active element 110 within the transducer of the probe to output the required ultrasonic waveforms 150, but without exceeding the maximum voltage for such a thin fragile piezoelectric element. Each pulse activation may be instigated and precisely controlled in time by an enable signal sent to the "pulser" circuitry 112 from an FPGA 114 or equivalent processor. For every activation, a fast T/R switch 116 allows the device to instantaneously switch between the transmit mode and the longer duration receive mode during which time the system acquires and digitally records the acoustic response to the transmitted pulse measured by the reciprocal piezoelectric element 110.

It might be that the amplitude level of the received signals of interest can vary significantly. Accordingly, to try to deal with this a variable gain amplifier (VGA) 118 could optionally be provided to induce gain across the acquired A-scan response in order to amplify the signal prior to digital acquisition. Moreover, to equalise the variability within each A-scan response due to propagation loss or attenuation with some materials, a form of automatic gain control (AGC) known as distance-amplitude correction (DAC) may also be implemented. The amplified A-scan is then digitized using a suitably wide dynamic range (e.g. 12 bit) analogue-to-digital converter (ADC) 120 where sufficient over-sampling above the Nyquist rate is provided as the sample rate fundamentally effects the temporal resolution of the measurement system and thus the accuracy of the thickness measurement; e.g. a sampling rate of 125MHz or higher may be suitable for a 20MHz transducer. The encoded digital waveforms from the ADC 120 may also require band pass filtering using a digital filter, for example a low order FIR with a pass band matching the operating frequency of the transducer. The Tx-Rx electronics are designed so as to minimise all possible sources of electronic noise that may be observed within each individual A-scan. Such uncorrelated noise is most effectively suppressed by averaging across N successive repeated A-scan measurements (i.e. providing a theoretical √N SNR gain). As will be understood, averaging is not necessarily conducted during the below described calibration method.

The ultrasound transducer 110 (e.g. a piezo-electric element) is preferably (although not necessarily) located toward the distal end of the tube 104 (i.e. at the end near the deformable contact element 108). The other electronics can be located anywhere within the probe, for example in the main body portion 102. Optionally, at least some of the other electronics could be located outside the probe, for example at least partially in the controller 220.

As will be understood, an ultrasound inspection device can have a mechanical axis 103 as well as an ultrasound axis 105. What the mechanical axis is will depend on the probe design. Typically, the mechanical axis of an ultrasound inspection device is defined with respect to the probe's coordinate system. In this embodiment, an ultrasound probe is mounted on an articulated head, and the probe's coordinate system rotates with the ultrasound probe as the ultrasound probe rotates about an axis of the articulated head. In the case of the ultrasound probe being mounted on an articulated head having two perpendicular axes of rotation, the X-axis of the ultrasound probe's coordinate system can be aligned with one of the axes of the head (e.g. the E axis - illustrated in Figure 3) and the Z-axis of the ultrasound probe's coordinate system can be aligned with the other of the axes (e.g. the D axis - illustrated in Figure 3). The Y axis completes a right-handed rectangular system, and for an axial probe, the mechanical axis is defined as the Z-axis (e.g. [0 0 1]*^{T}*) of the probe coordinate system. For a crank-angled version of the probe, the mechanical axis is a specified constant Euler rotation from this Z-axis column vector. The ultrasound axis is defined as the direction in which the ultrasound wave/pulse travels in the probe coordinate system. It is a fixed vector within the probe's coordinate system, and so like the mechanical axis, it rotates with the ultrasound probe as the ultrasound probe rotates about an axis of the articulated head.

As schematically illustrated by Figure 1, it could be assumed that the probe's ultrasound axis (e.g. L-wave axis) is aligned with the mechanical axis 3 of the probe 2, and therefore if the ultrasound probe engages the object with the mechanical axis normal to the front surface of object, then the ultrasound/L-wave axis will be projected into the part normal to the front surface of the object. Accordingly, if the probe's ultrasound axis is defined as a unit column vector *vᵤₐ*, fixed in probe coordinates, in an ideal situation where the probe's ultrasound axis is aligned with the probe's mechanical axis, *vᵤₐ* will be [0 0 1]*^{T}*.

However, as explained in WO2020/174214, it is very difficult to manufacture an ultrasound probe with its ultrasound (e.g. L-wave) axis being perfectly aligned with the mechanical axis of the probe. Rather, it is more than likely that the ultrasound\L-wave axis will be slightly misaligned with the mechanical axis of the probe (e.g. by up to 2 to 3 degrees). Causes of misalignment include mechanical misalignment between the shaft and/or body and the transducer, and/or acoustic misalignment (e.g. where the ultrasound beam might not be perfectly symmetrical). Figure 6a, schematically illustrates such a misalignment between the assumed ultrasound\L-wave axis (which is assumed to the same as the mechanical axis 103 shown in dotted-line) and calibrated L-wave axis 105 (shown in solid-line). The extent of the misalignment in Figure 6 is greatly exaggerated for the purposes of illustration.

Even when a small misalignment exists between the assumed and calibrated ultrasound\L-wave axes, the performance of the ultrasound probe apparatus is compromised. In particular, the accuracy of measurements obtained from the ultrasound probe apparatus can be adversely affected by misalignment between the assumed and calibrated L-wave axes. Such misalignment complicates, and diminishes the amplitude of, the interface echo(es).

For example, the distance travelled by the most intense highest amplitude L-wave will be greater than if the mechanical and ultrasonic axes were perfectly aligned and it would be a lower amplitude part of the projected L-wavefront that takes the shortest path between the front 9 and back-walls 11. This will result in lower amplitude and potentially dispersed interface echoes from which the time-delay measurement (and subsequent object, e.g. thickness measurement) is derived using signal processing algorithms that estimate the time-of-arrival or time-difference of arrival of these interface echoes and this can significantly degrade measurement accuracy in such a high precision thickness measurement system (e.g. within 10 microns).

This problem is compounded due to refraction. That is, if the L-wave does not enter the object normal to the surface, then it will be refracted from the normal in accordance with Snell's Law, the degree of refraction being dependent on the angle of incidence and the speed of sound within the deformable coupling element and the inspection object.

Problems associated with misalignment between the mechanical/assumed axis and the actual ultrasound (e.g. L-wave axis) can be significantly reduced by calibrating the ultrasound probe so as to find the ultrasound (L-wave) axis. An example method of calibrating the ultrasound probe 100 is described in WO2020/174214. Knowledge of the calibrated axis of the L-wave of the ultrasound probe can be advantageous for a number of reasons. The calibrated probe will more consistently return optimal interface echoes and improve signal to noise ratio which inherently improves thickness measurement accuracy. In other words, knowledge of the calibrated axis of the L-wave of the ultrasound probe enables the ultrasound probe to be oriented so as to obtain the cleanest signal. For instance, for a given point on an object to be inspected there can be a desired propagation vector for the L-waves to propagate along within the object, and therefrom a target inspection axis/vector may be determined. The target vector can be determined based on the assumed/known geometry of the part, including the part's material properties and taking into consideration Snell's law so that any expected refraction of the L-wave as it enters the part can be compensated for. Once the target vector has been determined, it is possible, based on knowledge of the relationship between the ultrasound probe's L-wave and mechanical axes from the above-mentioned calibration procedure, to calculate the D and E angles for the articulated head which will ensure that the L-waves propagate along the desired propagation vector within the object. For example, it is often preferred that the probe is arranged such that the probe's ultrasound axis is substantially parallel to the nominal surface normal of the back-wall feature 11, as illustrated in Figure 6b.

As mentioned towards the beginning of this document, until the advent of this invention, the inventor employed two different methods for determining the thickness of a part, which depended on the nominal thickness of the part. For instance, on relatively thin parts where multiple interface echoes were present between the DL1 and DL2 echoes, they would use a Mode-3 method which comprised performing an autocorrelation of a portion of the A-scan plot which contained only interface echoes. This gave a good reliable measurement of the time delay. However, such a technique is not feasible for thicker parts where only one interface echo is received. Accordingly, for relatively thicker parts, they would use a Mode-2 method which comprised finding respective peaks in the DL1 and BW echo and determining the time delay therebetween.

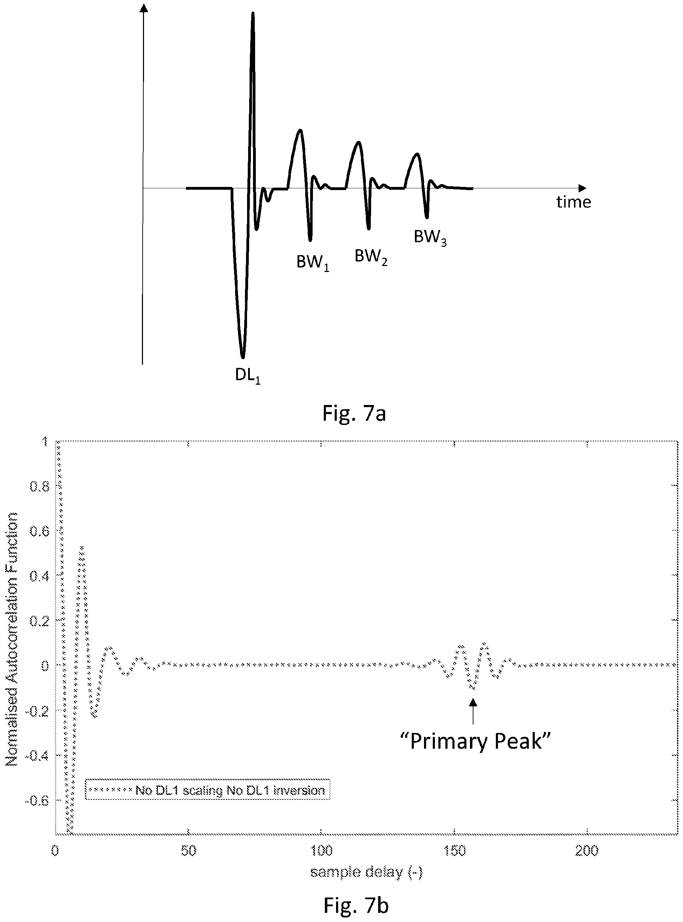

The inventor has identified a technique which they can use for both relatively thin and relatively thick parts. In particular, they have found that autocorrelation can be used on a portion of the A-scan plot which encompasses both the front-wall echo signal (DL1) and at least one interface echo signal (BW#). For instance, Figure 7a and 7b respectively illustrate an example A-scan plot comprising the front-wall echo signal (DL1) and multiple interface echo signal (BW#) and a corresponding autocorrelation signal thereof. As shown, there is, albeit small, a "Primary Peak" which could be used to establish the time delay between echoes. As will be understood, there are various known techniques that can be used to determine the location of the "Primary Peak". For example, (after throwing away data at the start of the sample, e.g. after 50 samples) the sample point with the greatest amplitude (i.e. the maximum value) could be identified. That sample point is then indicative of the time delay between echoes, which can then be used to determine one or more properties of the part being inspected (e.g. its thickness). If desired, it could be checked that the maximum sample point is a peak by checking that it has a greater amplitude than the two points either side of it. Furthermore, a curve/quadratic could be fitted to the maximum point and at least the two points either side of it, from which an interpolated peak point could be determined and used to identify the time delay between echoes. As will be understood, other maximum peak detection algorithms are well known. For example, all peaks in the signal could be identified and then they can be ordered according to amplitude.

Autocorrelation comprises the correlation of at least a selected portion of the A-scan plot (e.g. the portion encompassing the front-wall echo signal and at least one interface echo signal), i.e. the A-scan's "primary measurement window", with a time-delayed version of itself. As will be understood, autocorrelation could be calculated in the time domain or frequency domain. In a particular example, the Fourier transform of the A-scan's primary measurement window is determined, which is then multiplied by its complex conjugate, and then the inverse Fourier transform is determined (so as to convert it back to the delay time domain). As will be understood, other autocorrelation methods include performing a convolution of the A-scan's primary measurement window with itself.

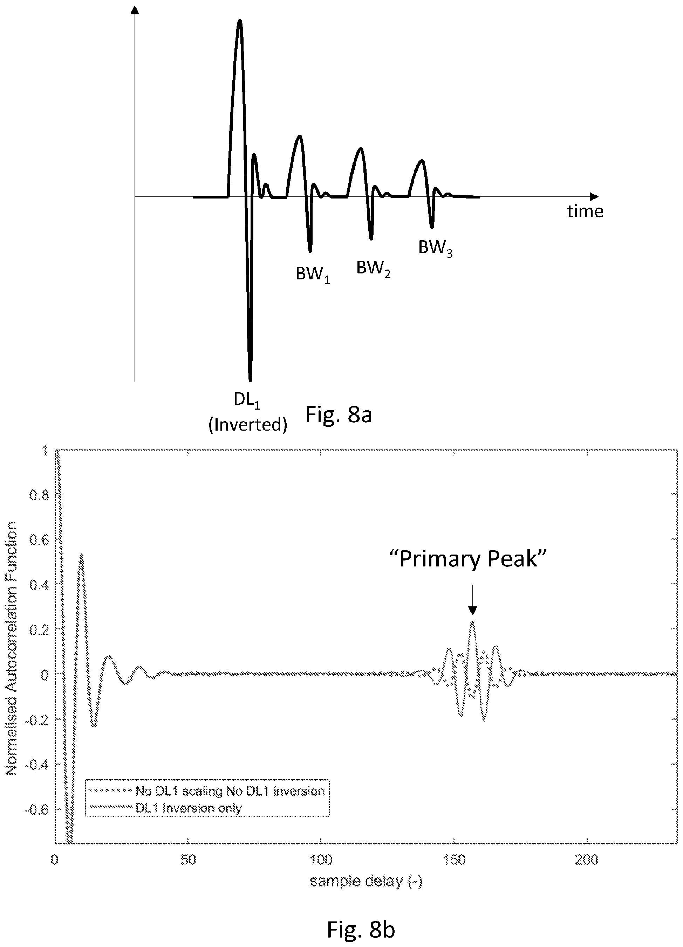

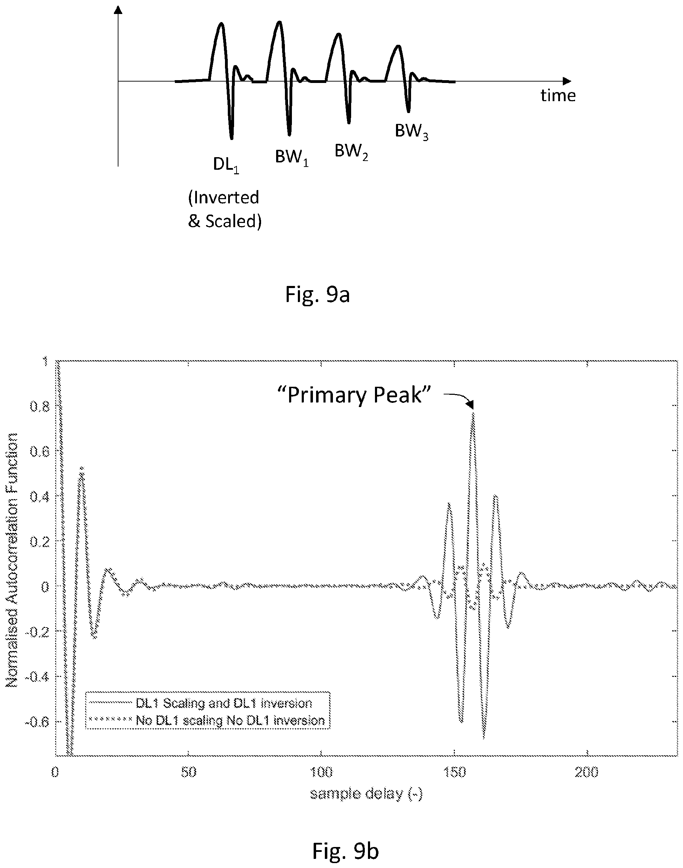

Even though performing an autocorrelation on the raw signal may be sufficient in some circumstances, the inventor found that autocorrelation of the raw signal is often susceptible to providing an erroneous determination of the time-delay because the "Primary Peak" is in many circumstances not sufficiently pronounced (for example with respect to the side peaks, and for example with respect to any noise which might be present), and so a false "Primary Peak" identification often occurs. The inventor found that the reliability of the autocorrelation technique for determining the time-delay between echoes can be significantly improved by inverting and/or scaling the front-wall and/or interface echo signals. For example, Figure 8a illustrates the same example A-scan plot of Figure 7a, but wherein the front-wall echo signal (DL1) has been inverted and Figure 8b illustrates the autocorrelation signal thereof. As can be seen, the "Primary Peak" is now positive and more pronounced and therefore more easily and more reliably identifiable. Furthermore, Figure 9a illustrates the same example A-scan plot of Figure 7a, but wherein the front-wall echo signal (DL1) has been inverted and also has been scaled such that the ratio of the peak envelope amplitude of BW1 to the peak envelope amplitude of DL1 is equal. As can be seen in Figure 9b, which illustrates the autocorrelation signal thereof, there is a substantial increase in the amplitude of the "Primary Peak" in the autocorrelation function, and therefore is significantly more easily and more reliably identifiable. In particular, the sharper/more pronounced the peak, the more likely the actual location of the peak will be identified which will result in a more accurate determination of the time delay between echoes.

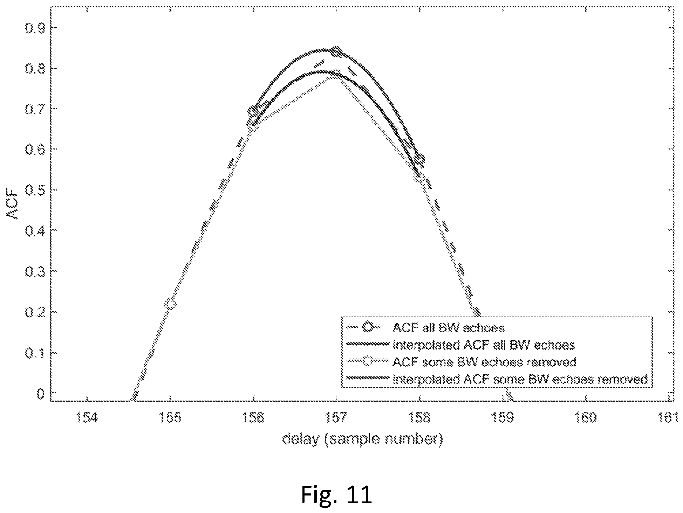

It has been found that it can be beneficial for very thin parts where many interface echoes are present between the first (DL1) and second (DL2) front-wall/delay line echoes, to remove some of the later interface echoes from the "primary measurement window" before performing the autocorrelation process. This is because it has been found that the interface echoes subtly, but increasingly, distort over successive echoes, which negatively impacts the autocorrelation process. In particular, it has been found that the above-described interpolated peak point can provide a more accurate representation of the actual time delay between echoes when excessive interface echoes have been removed. One way of choosing which interface echoes to remove from the "primary measurement window" can be to remove those interface echoes which occur after a time halfway between the first interface echo (BW1) and the second front-wall echo (DL2). Of course, other methods for selecting which interface echoes to remove could be used, for instance by choosing to remove any interface echoes greater than the third interface echo. An example effect of removing interface echoes is schematically illustrated in Figure 11 which shows the "Primary Peak" of the autocorrelation of a "primary measurement window" for both a signal wherein all interface echoes are still present in the "primary measurement window" and also for where some interface echoes have been removed, which in this case are those interface echoes which occur after a time halfway between the first interface echo (BW1) and the second front-wall echo (DL2).

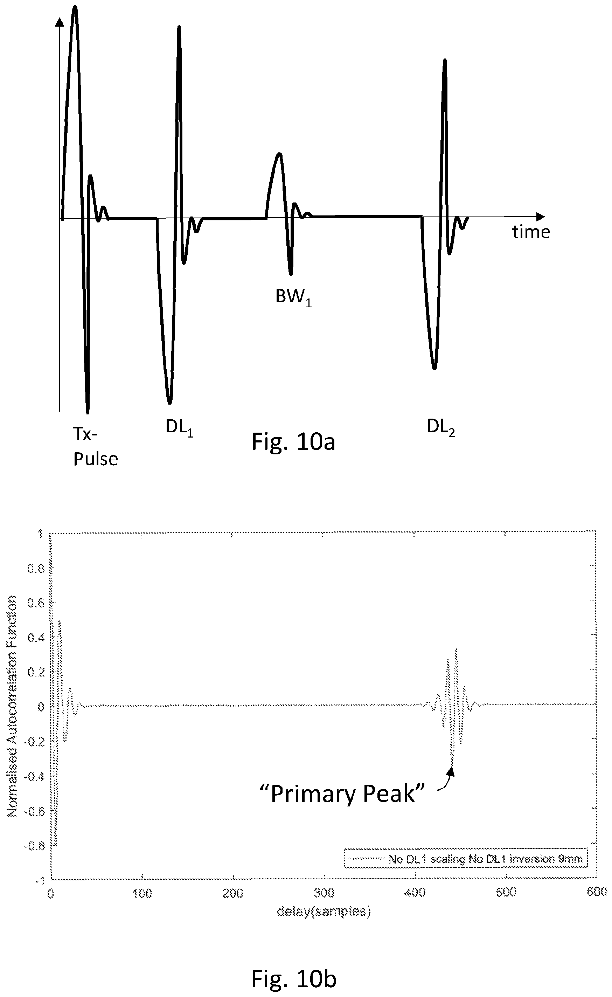

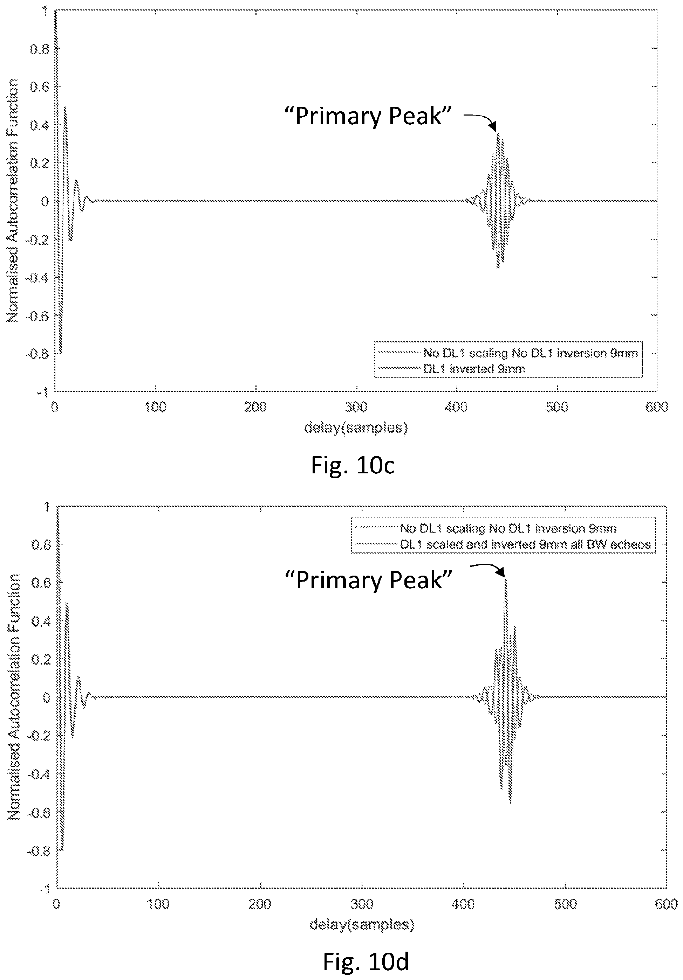

The above embodiments focus on relatively thin parts where multiple interface echoes are received before receipt of the second delay line echo (DL2). Similar effects and benefits from the autocorrelation process can be had on thicker parts where only one interface echo is present (before receiving the second (DL2) echo). For instance, Figure 10a illustrates an example A-scan plot received from an ultrasound measurement taken on a thick part where only a single interface echo signal (BW#) is received between the first (DL1) and second (DL2) echoes. Figures 10b, 10c and 10d respectively illustrate the autocorrelation signals of the raw signal of Figure 10a, the autocorrelation of the signal of Figure 10a wherein the part of the signal comprising the DL1 echo has been inverted, and the autocorrelation of the signal of Figure 10a wherein the part of the signal comprising the DL1 echo has been inverted and wherein the amplitude of the part of the signal comprising the DL1 echo has been scaled such that the ratio of the peak envelope amplitude of BW1 to the peak envelope amplitude of DL1 is equal.

As will be understood, although in the above embodiments the amplitude of the part of the signal comprising the DL1 echo is scaled such its peak envelope amplitude is the same as that of the BW1, this need not necessarily be the case. Improvements in the autocorrelation can be gained by scaling the DL1 or the BW echo(es) so as to reduce the difference in amplitudes of the DL1 and one or more of the BW echo(es). Accordingly, although a ratio of 1:1 might be preferred, this is not essential. Furthermore, when multiple interface echoes are present, the part of the signal comprising the DL1 echo (and/or the part comprising the interface echoes) could be scaled such that the ratio of the peak envelope amplitude of the DL1 echo to the peak envelope amplitude of all of the interface echoes (in the "primary measurement window") are approximately 1:1 (or some other desired ratio which is smaller than that of the original raw signals).

As will be understood, the DL1 and/or BW echoes can be scaled based on a measured other than the peak envelope amplitude, for instance based on their absolute maximum values, or their average root-mean-square (RMS) value.

As will be understood, the aforementioned scaling and/or inversion can be done via standard signal processing techniques, during and/or after data acquisition and could be implemented in hardware and/or software, for instance in the probe 100, controller 220 and/or PC 218.

The above-described examples invert and/or scale the part of the ultrasound measurement signal comprising the front-wall echo (DL1). However, as will be understood, the same effect will be received by inverting and/or scaling the part of the ultrasound measurement signal comprising the interface echo(es). Similarly, rather than scaling just the part of the ultrasound measurement signal comprising the front-wall echo, or just the part of the ultrasound measurement signal comprising the interface echo(es), the same effect can be achieved by scaling both of these parts so as to reduce the difference in their amplitudes.

## Claims

1. A method of determining the time delay between echoes of an ultrasound pulse emitted by an ultrasound inspection device (100) into an object (10), the method comprising:
i) with the ultrasound inspection device in engagement with a front-wall (9) feature of an object at a point to be measured, taking an ultrasound measurement, which comprises the ultrasound inspection device emitting an ultrasound pulse and recording an ultrasound measurement signal comprising a front-wall echo (DL#) and at least one interface echo (BW#) reflected by an internal or back-wall feature of the object; and
ii) determining the time delay between the front-wall echo and the at least one interface echo via autocorrelation of at least a segment of the ultrasound measurement signal which comprises the front-wall echo and the at least one interface echo;
wherein the method additionally comprises, prior to said autocorrelation, inverting the amplitude of one of:
a) the part of the ultrasound measurement signal comprising the front-wall echo; or
b) the part of the ultrasound measurement signal comprising the at least one interface echo.

2. A method as claimed in claim 1, comprising, prior to said autocorrelation, scaling the amplitude of:
a) the part of the ultrasound measurement signal comprising the front-wall echo; and/or
b) the amplitude of the part of the ultrasound measurement signal comprising the at least one interface echo,
so as to reduce the difference in the amplitudes therebetween.

3. A method as claimed in claim 2, in which the scaling is configured such that the ratio of the amplitude of the front-wall echo to the amplitude of the at least one interface echo is not more than 10:1, for instance not more than 2:1, preferably not more than3:2, more preferably substantially 1:1.

4. A method as claimed in any preceding claim, wherein when multiple interface echoes are present between successive front-wall echoes, the method comprises discarding at least one of said interface echoes from the signal from said autocorrelation.

5. A method as claimed in any preceding claim, comprising determining from the time delay at least one of the thickness of, material structure of, or speed of sound within the object between the front-wall feature and the internal or back-wall feature, at the point of measurement.

6. A method as claimed in any preceding claim, in which the front-wall feature and the internal or back-wall feature are nominally parallel.

7. A method as claimed in any preceding claims, in which the ultrasound inspection device comprises a single transducer for emitting and detecting the ultrasound pulse.

8. A method as claimed in any preceding claim, in which the ultrasound inspection device comprises a deformable coupling element (108) for engaging the surface of an object to be inspected.

9. A method as claimed in any preceding claim, in which the ultrasound inspection device is mounted on a positioning apparatus (200), for example a coordinate positioning apparatus.

10. A method as claimed in claim 9, in which the positioning apparatus facilitates relative translational motion of the ultrasound inspection device and object in at least two linear degrees of freedom, and facilitates relative rotational motion of the of the ultrasound inspection device and object about at least one axis of rotation.

## Patentansprüche

1. Verfahren zum Bestimmen der Zeitverzögerung zwischen Echos eines Ultraschallimpulses, der von einer Ultraschallprüfvorrichtung (100) in ein Objekt (10) ausgesendet wird, wobei das Verfahren umfasst:
i) wenn die Ultraschallprüfvorrichtung in Eingriff mit einem Vorderwandmerkmal (9) eines Objekts an einem zu messenden Punkt steht, Durchführen einer Ultraschallmessung, die umfasst, dass die Ultraschallprüfvorrichtung einen Ultraschallimpuls aussendet und ein Ultraschallmesssignal aufzeichnet, das ein Vorderwandecho (DL#) und mindestens ein Grenzflächenecho (BW#) umfasst, das von einem Innen- oder Rückwandmerkmal des Objekts reflektiert wird; und
ii) Bestimmen der Zeitverzögerung zwischen dem Vorderwandecho und dem mindestens einen Grenzflächenecho über Autokorrelation mindestens eines Segments des Ultraschallmesssignals, das das Vorderwandecho und das mindestens eine Grenzflächenecho umfasst;
wobei das Verfahren zusätzlich, vor der Autokorrelation, umfasst:
ein Invertieren der Amplitude von einem von:
a) dem Teil des Ultraschallmesssignals, der das Vorderwandecho umfasst; oder
b) dem Teil des Ultraschallmesssignals, der das mindestens eine Grenzflächenecho umfasst.

2. Verfahren nach Anspruch 1, umfassend, vor der Autokorrelation, Skalieren der Amplitude von:
a) dem Teil des Ultraschallmesssignals, der das Vorderwandecho umfasst; und/oder
b) der Amplitude des Teils des Ultraschallmesssignals, der das mindestens eine Grenzflächenecho umfasst,
um die Differenz in den Amplituden dazwischen zu verringern.

3. Verfahren nach Anspruch 2, wobei das Skalieren derart konfiguriert ist, dass das Verhältnis der Amplitude des Vorderwandechos zu der Amplitude des mindestens einen Grenzflächenechos nicht mehr als 10:1, zum Beispiel nicht mehr als 2:1, vorzugsweise nicht mehr als 3:2, mehr bevorzugt im Wesentlichen 1:1 beträgt.

4. Verfahren nach einem der vorhergehenden Ansprüche, wobei, wenn mehrere Grenzflächenechos zwischen aufeinanderfolgenden Vorderwandechos vorhanden sind, das Verfahren das Verwerfen mindestens eines der Grenzflächenechos aus dem Signal aus der Autokorrelation umfasst.

5. Verfahren nach einem der vorhergehenden Ansprüche, umfassend das Bestimmen aus der Zeitverzögerung mindestens eines von der Dicke, der Materialstruktur oder der Schallgeschwindigkeit innerhalb des Objekts zwischen dem Vorderwandmerkmal und dem Innen- oder Rückwandmerkmal an dem Messpunkt.

6. Verfahren nach einem der vorhergehenden Ansprüche, wobei das Vorderwandmerkmal und das Innen- oder Rückwandmerkmal nominell parallel sind.

7. Verfahren nach einem der vorhergehenden Ansprüche, wobei die Ultraschallprüfvorrichtung einen einzigen Wandler zum Aussenden und Detektieren des Ultraschallimpulses umfasst.

8. Verfahren nach einem der vorhergehenden Ansprüche, wobei die Ultraschallprüfvorrichtung ein verformbares Kopplungselement (108) zum Eingreifen in die Oberfläche eines zu prüfenden Objekts umfasst.

9. Verfahren nach einem der vorhergehenden Ansprüche, wobei die Ultraschallprüfvorrichtung auf einer Positionierungsvorrichtung (200), zum Beispiel einer Koordinatenpositionierungsvorrichtung, montiert ist.

10. Verfahren nach Anspruch 9, wobei die Positionierungsvorrichtung eine relative Translationsbewegung der Ultraschallprüfvorrichtung und des Objekts in mindestens zwei linearen Freiheitsgraden ermöglicht und eine relative Drehbewegung der Ultraschallprüfvorrichtung und des Objekts um mindestens eine Drehachse ermöglicht.

## Revendications

1. Un procédé de détermination du délai entre les échos d'une impulsion ultrasonore émise par un dispositif d'inspection par ultrasons (100) dans un objet (10), le procédé comprenant :
i) avec le dispositif d'inspection par ultrasons en prise avec une entité de paroi frontale (9) d'un objet en un point à mesurer, en prenant une mesure ultrasonore, qui comprend le dispositif d'inspection par ultrasons émettant une impulsion ultrasonore et enregistrant un signal de mesure ultrasonore comprenant un écho de paroi frontale (DL#) et au moins un écho d'interface (BW#) réfléchi par une entité de paroi interne ou arrière de l'objet ; et
ii) déterminer le délai entre l'écho de paroi frontale et le ou les échos d'interface par autocorrélation d'au moins un segment du signal de mesure ultrasonore qui comprend l'écho de paroi frontale et le ou les échos d'interface ;
dans lequel le procédé comprend en outre, avant ladite autocorrélation, l'inversion de l'amplitude de l'un des éléments suivants :
a) la partie du signal de mesure ultrasonore comprenant l'écho de la paroi frontale ; ou
b) la partie du signal de mesure ultrasonore comprenant le ou les échos d'interface.

2. Un procédé selon la revendication 1, comprenant, avant ladite autocorrélation, la mise à l'échelle de l'amplitude de :
a) la partie du signal de mesure ultrasonore comprenant l'écho de la paroi frontale ; et/ou
b) l'amplitude de la partie du signal de mesure ultrasonore comprenant le ou les échos d'interface,
de manière à réduire la différence des amplitudes entre elles.

3. Un procédé selon la revendication 2, dans lequel la mise à l'échelle est configurée de telle sorte que le rapport de l'amplitude de l'écho de paroi frontale à l'amplitude du ou des échos d'interface n'est pas supérieur à 10:1, par exemple pas supérieur à 2:1, de préférence pas supérieur à 3:2, plus préférablement sensiblement 1:1.

4. Un procédé selon l'une quelconque des revendications précédentes, dans lequel lorsque de multiples échos d'interface sont présents entre des échos de paroi frontale successifs, le procédé comprend l'élimination d'au moins un desdits échos d'interface du signal de ladite autocorrélation.

5. Un procédé selon l'une quelconque des revendications précédentes, comprenant la détermination à partir du délai d'au moins l'une de l'épaisseur, de la structure matérielle ou de la vitesse du son à l'intérieur de l'objet entre l'entité de paroi frontale et l'entité de paroi interne ou arrière, au point de mesure.

6. Un procédé selon l'une quelconque des revendications précédentes, dans lequel l'entité de paroi frontale et l'entité de paroi interne ou de paroi arrière sont nominalement parallèles.

7. Un procédé selon l'une quelconque des revendications précédentes, dans lequel le dispositif d'inspection par ultrasons comprend un seul transducteur pour émettre et détecter l'impulsion ultrasonore.

8. Un procédé selon l'une quelconque des revendications précédentes, dans lequel le dispositif d'inspection par ultrasons comprend un élément de couplage déformable (108) pour engager la surface d'un objet à inspecter.

9. Un procédé selon l'une quelconque des revendications précédentes, dans lequel le dispositif d'inspection par ultrasons est monté sur un appareil de positionnement (200), par exemple un appareil de positionnement par coordonnées.

10. Un procédé selon la revendication 9, dans lequel l'appareil de positionnement facilite le mouvement de translation relatif du dispositif d'inspection par ultrasons et de l'objet dans au moins deux degrés linéaires de liberté, et facilite le mouvement de rotation relatif du dispositif d'inspection par ultrasons et de l'objet autour d'au moins un axe de rotation.
